# EUROPÄISCHE PATENTSCHRIFT

(11) **EP 3 115 151 B1**
(45) Veröffentlichungstag und Bekanntmachung des Hinweises auf die Patenterteilung: **08.09.2021**
(21) Anmeldenummer: 15201123.5
(22) Anmeldetag: 18.12.2015
(51) Int. Cl.: B24C 9/00

(54) **RÜCKGEWINNUNG VON SCHLEIFMITTEL VON ABRASIV-WASSERSTRAHL-SCHNEIDANLAGEN**
RECOVERY OF ABRASIVE FROM ABRASIVE - WATER JET - CUTTING INSTALLATIONS
RECUPERATION D'AGENT ABRASIF A PARTIR D'INSTALLATIONS DE DECOUPE AU JET ABRASIF

(30) Priorität: 07.07.2015 AT 505942015
(43) Veröffentlichungstag der Anmeldung: 11.01.2017
(73) Patentinhaber: STM Stein-Moser GmbH, 5531 Eben im Pongau (AT)
(72) Erfinder: Moser, Jürgen, 5500 Bischofshofen (AT)
(74) Vertreter: Wildhack & Jellinek

(56) Entgegenhaltungen:
- DE-A1- 2 739 286
- DE-A1- 19 645 142
- JP-A- 2010 237 013
- US-B1- 6 805 618
- None

## Beschreibung

Die Erfindung bezieht sich auf ein Verfahren zur Rückgewinnung von Schleifmittel aus Schneidabfall in Auffangwannen von Abrasiv-Wasserstrahl-Schneidanlagen, wobei eine Separierung von einer gewünschten Größenklasse an Schleifkörnern und dem Restmaterial erfolgt.

Weiters betrifft die Erfindung eine Vorrichtung zur Rückgewinnung von Schleifmittel aus Schneidabfall aus Auffangwannen von Abrasiv-Wasserstrahl-Schneidanlagen mit einem Mittel zur Separierung einer gewünschten Größenklasse an Schneidkörnern und dem Restmaterial.

Beim Wasserstrahlschneiden, welches Verfahren seit Jahren zum Stand der Technik zählt, wird das zu bearbeitende Werkstück mit einem Hochdruck-Wasserstrahl trennend bearbeitet.

Trotz hoher Drücke und daher hochenergetischer Wasserstrahlen haben deren Schneidkapazität Grenzen.

Im Hinblick auf ein Durchtrennen von dickeren und härteren Werkstoffen kann dem Wasser ein Schneidmittel, zum Beispiel Granat- oder Korundkörner beigemischt werden, was in der Fachsprache Wasserstrahl-Abrasivschneidtechnik genannt wird.

Mittels Abrasivschneiden werden in der Regel harte Materialien, wie Stahl, Aluminium, Kunststoffe, Naturstein, Glas, Keramik und dergleichen bearbeitet bzw. geschnitten.

Im Wesentlichen wird bei einem Abrasivschneiden in einer Düse ein hochkomprimiertes Wasser zu einem Strahl mit einem Durchmesser von etwa 0,25 bis 0,40 mm in einer Mischkammer geformt, in dieser mit Abrasivmittel versetzt und durch eine nachgeordnete Abrasivdüse fokusiert, wonach die mittels des Wasserstrahls beschleunigten Partikel des Abrasivmittels mit einer Geschwindigkeit von etwa 600 m/sec auf das Werkstück treffen, wo deren kinetische Energie in Abtragearbeit umgewandelt wird.

Das Abrasiv- bzw. Schleifmittel wird in der Folge mit den Spänen und Teilen des Werkstückes in Auffangwannen gesammelt.

Abrasiv- bzw. Schleifmittel sind kostenaufwendige Rohmaterialien für ein Abrasiv-Wasserstrahlschneiden, weshalb schon eine Reihe von Vorschlägen gemacht wurden, aus den Auffangwannen diese zumindest teilweise rückzugewinnen und einem Wiedereinsatz zuzuführen.

Eine Rückgewinnung der Abrasivmittel weist jedoch wirtschaftliche Probleme auf und ist nur aufwendig durchzuführen, weil an die Reinheit und die Größe der Schleifkörner hohe Anforderungen gestellt werden und daher eine Separierung und Klassierung von entscheidender Bedeutung sind.

Das Dokument EP0742079 offenbart im Wesentlichen ein Verfahren zur Rückgewinnung von Schleifmittel, bei welchem der gesamte Schneidabfall aus einer Auffangwanne einer Trocknung zugeführt wird, wonach eine Klassierung, sowie eine Sortierung der Trockensubstanz erfolgen und ein wiederverwendbares Schleifkornmaterial bereitgestellt wird.

Eine Trocknung eines am Wannenboden abgesetzten Schneidmaterials einer Wasserstrahl-Schneidanlage mit einer anschließenden Suspendierung desselben in einem Luftstrom, sowie Sammeln in unterschiedlichen Größenfraktionen vermittelt beispielsweise die DE4106831C1.

Aus der DE19643807C1 ist weiters eine Vorrichtung zur Abrasivmittelrückgewinnung bei Wasserstrahlschneidanlagen bekannt geworden, bei welcher ein Separator zur Trennung von brauchbarem Abrasivmittel von Schlamm und Brauchwasser bei Bildung von gepressten Portionen, gefolgt von einem Trockenofen positioniert sind, welcher Trockenofen von erwärmter und in dieser weiter erhitzten Abluft durchströmt wird.

Ein Verfahren und eine Vorrichtung zum Recyceln von Sanden und Recyceln des beim Abrasiv-Hochdruck-Wasserstrahlschneiden anfallenden und wiederverwertbaren Schneidmittelanteiles offenbart die Offenlegungsschrift DE 196 45 142. Das Verfahren beruht darauf, dass in einer Aufströmung die feinkörnigen Partikel ausgespült, durch Strömungsberuhigung sedimentiert, nachfolgend gefiltert und gesammelt und die grobkörnigen Partikel abgeführt, mechanisch vorentwässert, getrocknet und der Wiederverwertung zugeführt werden.

Alle Vorrichtungen und Verfahren zur Rückgewinnung von Schleifmittel aus dem in Rede stehenden Schneidabfall haben sich aus Gründen einer geringen Wirtschaftlichkeit und/ oder einer unzureichenden, technischen Funktion nur im geringen Ausmaß in der Praxis durchgesetzt.

Die Erfindung setzt sich nun zum Ziel, ein Verfahren zur Rückgewinnung von Schneidmittel aus Schneidabfall in Auffangwannen von Abrasiv-Wasserstrahl-Schneidanlagen mit einer Separierung von einer gewünschten Kornklasse aus Schleifkörnern anzugeben, nach welchem auf einfache, sichere und wirtschaftliche Weise, ein allen Erfordernissen gerecht werdender Schleifmittelzusatz erstellbar ist.

Weiters ist es Aufgabe der Erfindung, eine Vorrichtung zur Rückgewinnung von Schleifmittel aus Schleifabfall der eingangs genannten Art zu schaffen, welche auf einfache, sichere und wirtschaftliche Weise eine wiedereinsetzbare Schleifkornfraktion bewerkstelligt.

Das Ziel wird bei einem Verfahren der eingangs genannten Art dadurch erreicht, dass der Schneidabfall mit Wasser aufgeschlämmt oder in Wasser integriert, durch eine Gewichtsklassierung, wobei Anteile mit einer Dichte 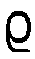 von weniger als 2x10³kg/m³ abgeschieden und ausgetragen werden, vorbereitet einer Durchmesserklassierung durch Nasssiebung unterworfen wird und bei einem Ausscheiden von Grob- und Feinanteilen eine Erstellung einer gewünschten Durchmesserklasse des Restmaterials, welches einen wesentlichen Anteil an Schleifmittel aufweist, erfolgt, dieses getrocknet und aus dem trockenen Granulat, das Schleifmittel ausgetragen, in mehrere Größenklassen geteilt und teilweise oder ausschließlich als abrasiver Schneidmittelzusatz zum Wasserstrahl in derartigen Schneidanlagen eingesetzt wird.

Wenn, wie erfindungsgemäß vorgesehen der Schneidabfall aufgeschlämmt beziehungsweise in Wasser integriert wird, kann eine im Wesentlichen homogene Schlämme erstellt werden, wobei deren Homogenität für eine gezielte Weiterverarbeitung wichtig ist.

Wenn vom Schneidprozess Reste vom Werkstoff des Schneidteiles bzw. Abfallstücke in der Schlämme gehalten werden, können diese wirkungsvoll durch eine Gewichtsklassierung, wobei Anteile mit einer Dichte 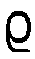 von weniger als 2x10³kg/m³ abgeschieden und ausgetragen werden, ausgesondert werden.

Eine derartig vorbereitete Schlämme wird anschließend einer Durchmesserklassierung durch Nasssiebung unterworfen.

Eine Nasssiebung ist nach der Erfindung wesentlich, weil es sich bei der Schlämme um eine Suspension handelt, die auch sehr feines zur Agglomeration neigendes Pulver beinhaltet, welches bei einer Trockensiebung zu einer Verstopfung von Siebmaschen führen und die Durchmesserklassierung behindern kann.

Ein Ausscheiden von Grob- und Feinanteilen kann nach dem Stand der Technik durch drehende Siebeinrichtungen oder Siebförderbänder erfolgen, wobei die gewünschte Durchmesserklasse des Restmaterials, welches einen wesentlichen Anteil des verwendbaren Schleifmittels aufweist, einer Trocknung zugeführt wird.

Eine Trocknung lediglich des Restmaterials der Schlämme hat den Vorteil, dass nur geringe Wassermengen zur Verdunstung gebracht werden müssen, wodurch eine große Menge von Verdampfungsenergie eingespart wird.

Aus dem trockenen Granulat des Restmaterials erfolgt ein Austragen des Schleifmittels, wofür insbesondere Verfahren einer Gewichtsklassierung bei Zugrundelegung der Dichte des verwendeten Schleifmittels vorteilhaft verwendbar sind.

Gegebenenfalls lässt sich in der Folge eine Größenklassierung der Schleifmittelkörner nachordnen, um einem bestimmten Einsatzerfordernis Rechnung tragen zu können.

In einer bevorzugten Form des erfindungsgemäßen Verfahrens wird der aufgeschlämmte Schneidabfall durch Pumpen transportiert und einer Gewichtsklassierung mittels Zyklontrennung unterworfen, wobei Anteile der Schlämme mit einer Dichte 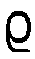 von weniger als 3x10³ kg/ m³ ausgeschieden und ausgetragen werden. Diese Gewichtsklassierung erfolgt in günstiger Weise mittels einer Zyklontrennung der Schlämme, weil dadurch eine nachfolgende Nasssiebung derselben gefördert wird.

Eine Nasssiebung in der Folge erbringt mit Vorteil Feststoffpartikel in einer Klasse mit einem Durchmesser von 30 µm und 400 µm, wobei ein Austrag der Restschlämme und der größeren nassen Partikelanteile erfolgt.

Bei einer Nasssiebung ist es günstig, wenn die Einrichtung mindestens zwei Siebgrößen aufweist, wobei die Schlämme auf ein erstes Sieb mit einer Maschenweite von 400 µm bis 200 µm aufgebracht wird und die größeren Partikel ausgetragen werden und der Durchsatz auf mindestens ein weiteres Sieb mit einer Maschenweite von weniger als 200 µm gelangt, wobei durch ein letztes Sieb mit einer Maschenweite von größer/gleich 30 µm das feinere Material und die Schlämme dem Abraum zugeführt werden.

Der Festanteil mit den Schleifkörnern in der gewünschten Größenklasse ist im Vergleich mit dem Volumen des Schneidabfalles eher gering.

Aufgrund des kleinen Volumens des Festanteiles mit den Schleifkörnern ist die für die Trocknung zuzuführende Wärmeenergie vergleichsweise niedrig.

Einen besonderen Vorteil bei erniedrigtem Energieaufwand und daher verbesserter Wirtschaftlichkeit ist eine Infrarot-Trocknung mit einer Wellenlänge von 0.75 µm bis 15 µm, weil dadurch eine beschleunigte Verdampfung des Wasseranteiles erreichbar ist.

Die weitere Aufgabe der Erfindung ist, eine Vorrichtung zur Rückgewinnung von Schleifmittel aus Schleifabfall aus Auffangwannen von Abrasiv - Wasserstrahl - Schneidanlagen zu schaffen, welche auf einfache, sichere und wirtschaftliche Weise eine wiedereinsetzbare Schleifkornfraktion bewerkstelligt, wird dadurch gelöst, dass eine Vorrichtung zur Aufbereitung einer Schlämme des Schneidabfalles mit Wasser mit einem Abscheider für einen Leichtanteil, mit einer Nasssiebeinrichtung zur Klassierung beziehungsweise Klassifikation des Schweranteiles und nachgeordnet mit einem Trockner für eine gewünschte Größenklasse gebildet ist, wobei die Nasssiebeinrichtung mindestens ein Grobsieb zur Abscheidung des Anteiles, der die gewünschte Größenklasse übersteigt, sowie ein Feinsieb zur Ausscheidung des Feinanteiles mit Wasser aus der Restschlämme und einen Austrag der gewünschten Größenklasse des Schweranteiles aufweist, für welchen Schweranteil in der Folge ein Trockner und ein Separator für den Schleifmittelanteil positioniert sind und eine Klassiereinrichtung für diesen der Siebeinrichtung nachgeordnet ist.

Die erfindungsgemäße Vorrichtung weist eine Aneinanderreihung von einzelnen an sich bekannten Einrichtungen auf, die jedoch jeweils in deren Abstimmung miteinander eine neue, einfache, sichere und wirtschaftliche Rückgewinnung von Schleifmittel aus dem Schleifabfall aus Auffangwannen ermöglichen.

Eine Schlämme mit Schneidabfall wird unmittelbar und nach deren Austrag aus einer Auffangwanne mit Wasser gebildet, wobei gegebenenfalls, wenn die Abrasiv-Wasserstrahl- Schneidanlage auch für ein Schneiden von Leichtwerkstoffen, wie Kunststoffen und dergleichen dienen soll, diese einen Abscheider aufweisen kann.

Eine Schlämme mit verbleibenden Schweranteilen ist mittels Pumpen vorteilhaft leicht verbringbar und in eine Klassiereinrichtung, welche als Nasssiebeinrichtung gebildet ist, einleitbar.

Erfindungsgemäß weist eine Nasssiebeinrichtung zur Klassierung der Feststoffe der Schlämme der Anlage mindestens ein Grobsieb zur Abscheidung eines Anteiles, der die gewünschte Größenklasse der Körnung übersteigt, und mindestens ein Feinsieb zur Ausscheidung des Feinanteiles mit Wasser aus der Restschlämme auf und besitzt einen Austrag für die gewünschte Größenklasse des Schweranteiles.

Eine derartige Siebeinrichtung kann erfindungsgemäß mit einer koaxiale Siebrohre aufweisenden Siebtrommel oder mit mehreren Siebförderbändern ausgeführt sein. Wichtig ist, dass die Klassierung der Schlämme als Nasssiebung erfolgt, weil die Feststoffteilchen in diesem Durchmesserbereich zur Agglomeration neigen, was zu einer Verstopfung der Siebmaschen bei einer Trockensiebung führen kann.

Ein nachgeordneter Trockner ist für eine vollkommene Entwässerung des Schweranteiles vorgesehen, welcher mit einem Separator für eine Konzentration des Schleifmittelanteiles zusammenwirken kann.

In günstiger Weise ist der erste Teil einer Einrichtung zur Aufbereitung des Schneidabfalles aus einer Aufschlämmeinrichtung mit Wasser und mindestens einer nachgeordneten Flüssigkeitspumpe gebildet, mittels welcher die Schlämme zur Separierung des Leichtanteiles einem Abscheider in Form einer Zykloneinrichtung zuführbar ist. Zyklonseparatoren arbeiten wirtschaftlich und sind besonders gut für eine Abscheidung von unterschiedlichen Schweranteilen im Wasser geeignet.

Im Einzelnen ist von Vorteil, wenn zur Klassierung des Schweranteiles eine Nasssiebung mit mindestens zwei kooperierenden beziehungsweise zusammenwirkenden Sieben, die jeweils ein Fördermittel für das Siebgut aufweisen können, gebildet ist, wobei ein beaufschlagungsseitig angeordnetes beziehungsweise vorgeordnetes Grobsieb mit einer Zuführanlage der Schlämme mit Schweranteil eine Maschenweite von kleiner 400 µm aufweist und einen Austrag für ein gröberes Korn hat und das Feinsieb zur Abscheidung der Restschlämme eine Maschenweite von 30 µm hat, wobei zumindest das Sieb mit Klarwasser beaufschlagbar ist und einen Austrag für die gewünschte Kornfraktion hat.

Wirtschaftlich hat es sich als besonders günstig herausgestellt, wenn eine Trockeneinrichtung unter Verwendung von Infrarotstrahlung für die gewünschte Kornfraktion der Siebeinrichtung nachgeordnet ist, wobei die Strahlung eine Frequenz von im Wesentlichen 0.75 µm bis 15 µm aufweist.

Obige Infrarotstrahlungsfrequenz bewirkt eine wesentlich schnellere und effizientere Wasserverdunstung, weil Wasser eine Strahlungsenergie mit obiger Frequenz besonders gut absorbiert.
Wenn der Trockeneinrichtung unmittelbar eine Separiereinrichtung beziehungsweise ein Separator für Schleifmittelkörner und Restkörner der gleichen Kornklasse nachgeordnet ist, wird eine verbesserte Wirksamkeit der Trennung erreicht.

Es kann für einen speziellen Einsatz von rückgewonnenem Schleifmittel von Vorteil beim Wiedereinsatz in Wasserstrahl-Schneidanlagen sein, wenn eng begrenzte Korngrößen für eine gewünschte Schnittherstellung erforderlich sind, und daher einer Separiereinrichtung eine Klassiereinrichtung für die Schleifkörner nachgeordnet ist.

Im Folgenden soll die Erfindung an schematischen Prinzipskizzen, die allenfalls jeweils nur einen Ausführungsweg der Erfindung darstellen, näher erläutert werden.

Es zeigen
- Fig. 1: eine Vorrichtung zur Rückgewinnung von Schleifmittel
- Fig. 2: eine Siebeinrichtung mit koaxialen Siebrohren
- Fig. 3: eine Siebeinrichtung mit Siebförderbändern

Zur leichteren Zuordnung der Teile und Komponenten der erfindungsgemäßen Vorrichtung soll nachfolgende Bezugszeichenliste dienen.
- S: Abrasiv-Wasserstrahl-Schneidanlage
- A: Auffangwanne
- 1: Schneidabfall
- 11: Aufschlämmeinrichtung
- 12: Flüssigkeitspumpe
- 2: Wasser
- 3: Abscheider für Leichtanteil
- 31: Zuführanlage der Schlämme
- 4: Austrag für Leichtanteil
- 5: Nasssiebeinrichtung
- 51: Grobsieb
- 51 F: Fördermittel für Grobkorn
- 511: Austrag für Grobkorn
- 512: Fluidbrause
- 52: Feinsieb
- 52 F: Fördermittel für gewünschte Kornfraktion
- 521: Austrag für gewünschte Kornfraktion
- 522: Klarwasserbeaufschlagung
- 522 0: Luftbeaufschlagung
- 523: Austrag für Wasser und Feinkorn
- 524: Austrag Feinkorn-Festteile
- 524 W: Wasserabscheider
- 6: Trockner
- 7: Separiereinrichtung
- 8: Klassiereinrichtung

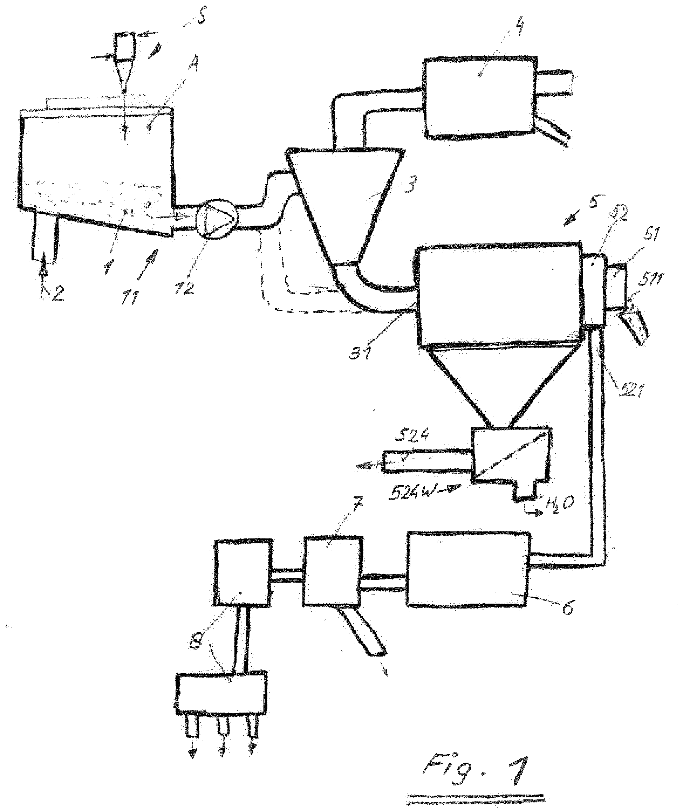

In Fig. 1 ist eine Vorrichtung zur Rückgewinnung von Schleifmittel aus einer Abrasiv-Wasserstrahl-Schneidanlage schematisch dargestellt.

Ein mit einem Abrasivschneidmittel beladener Wasserstrahl tritt aus einer Fokussierdüse einer Mischkammer S einer Anlage mit einer Geschwindigkeit von beispielsweise über 600 m/sec aus, schneidet ein Werkstück, welches sich auf einer Auflage befindet und wird mit Spänen sowie Teilen vom Werkstück in einer Auffangwanne A aufgefangen.

Mit Wasser 2 und Schneidabfall 1 wird in einer Aufschlämmeinrichtung 11 eine Schlämme gebildet, welche mittels einer Pumpe 12, einem Abscheider 3 für einen Leichtanteil oder direkt durch eine Zuführanlage 31 einer Klassiereinrichtung, welche als Nasssiebeinrichtung 5 ausgeführt ist, zugeführt. Ein Abscheider 3 für einen Leichtanteil der Schlämme kann in Form eines Zyklons mit einem Austrag 4 gestaltet sein.

Eine Klassiereinrichtung für eine Körnung einer Schlämme in Form einer Nasssiebeinrichtung 5 kann jeder einsetzbaren Siebtechnik entsprechend unterschiedlich gestaltet sein. Wichtig ist, dass eine Zuführanlage 31 eine Schlämme unmittelbar auf ein Grobsieb 51 aufbringt, welches Fördermittel für Grobkorn 51 F aufweisen kann und einen Austrag für Grobkorn 511 hat.
Im Durchgang durch mindestens ein Grobsieb 51 gelangt die Schlämme ohne Grobkornanteil letztlich auf ein Feinsieb 52, mittels welchen ein Feinanteil mit geringem Korndurchmesser samt Wasser durchgefördert und aus der Nasssiebeinrichtung 5 ausgebracht werden kann. Eine derartige Ausförderung kann zumeist aus Umweltgründen über einen Wasserabscheider 524 W erfolgen, der in der Regel einen Austrag 524 für Feinkorn-Festteile aufweist.

Nach einem Feinsieb 52, welches Fördermittel 52 F im Sieb 52 für eine Verteilung und Fortleitung einer gewünschten Kornfraktion aufweisen kann, erfolgt über einen Austrag 521 eine unmittelbare Einleitung der feuchten Körner in einen Trockner 6. Eine derartige Trockeneinrichtung 6, bevorzugt gebildet als Infrarotstrahlungs-Einrichtung mit einer Wellenlänge von im Wesentlichen 0.75 µm bis 15 µm, bewirkt eine intensive Wasserverdampfung.

In einer nachgeordneten Separiereinrichtung können Schleifmittelkörner und gleichgeartete Körner vom Restmaterial getrennt und in der Folge die SchleifmittelKörner in einer Klassiereinrichtung weiter in einzelne Größenklassen getrennt werden.

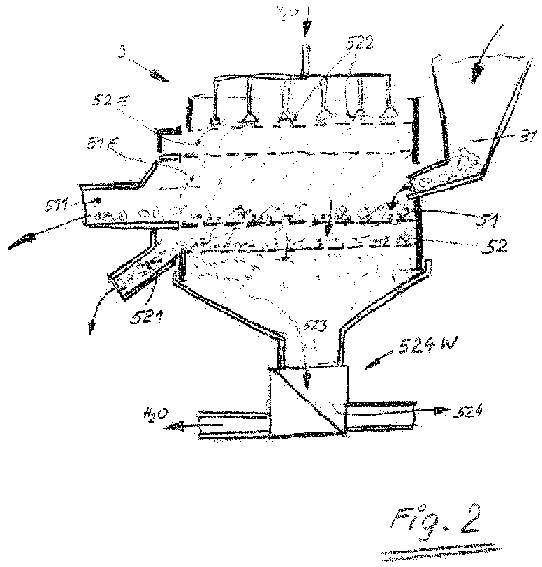

Fig. 2 zeigt schematisch eine Nasssiebeinrichtung 5 mit koaxialen Siebrohren. Eine Nasssiebeinrichtung 4 weist koaxial drehbar eine innere Siebtrommel 51 als Grobsieb und eine äußere Siebtrommel 52 als Feinsieb auf.

In die innere Siebtrommel reicht eine Zuführungsanlage 31 für eine Schlämme.

Sowohl das Grobsieb 51 als auch das Feinsieb 52 können Fördermittel 52 F, 54 F zum Transport eines Siebeinsatzes aufweisen, wobei das Fördermittel für Grobkorn 51 zur Bewegung eines Grobanteiles der Schlämme entlang einer Innenoberfläche eines Grobsiebes 51 zum Austrag hin für Grobkorn 511 dient.

Das Fördermittel für eine gewünschte Kornfraktion 52 F zur Verteilung einer Restschlämme an der Innenoberfläche des Feinsiebes 52 ist sowohl für eine Hilfestellung eines Austrages von Wasser und Feinkorn 523 durch das Feinsieb 52 als auch für eine Förderung hin zum Austrag für die gewünschte Kornfraktion 521 geeignet.

Einem Austrag von Wasser und Feinkorn 523 kann ein Wasserabscheider 524 W nachgeordnet sein, mittels welchen das Feinkorn konzentriert und das Wasser für einen Wiedereinsatz gereinigt werden kann.

Für eine vorteilhafte Nasssiebung dient eine Klarwasserbeaufschlagung 522 mindestens des Feinsiebes 52, vorzugsweise an der Oberseite desselben.

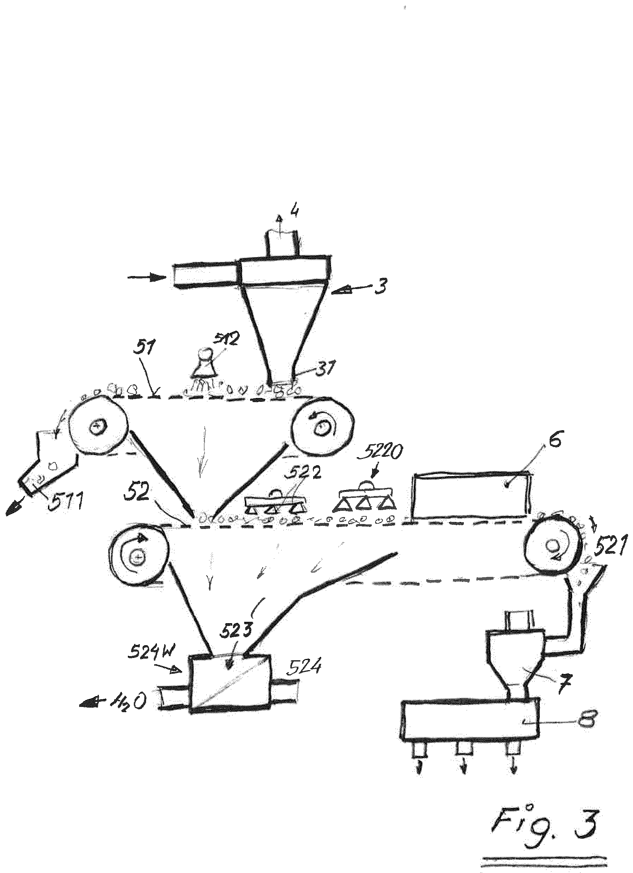

In Fig. 3 ist schematisch eine Klassierung in einer Nasssiebeinrichtung mit Siebförderbändern ersichtlich.

Aus einem Abscheider für Leichtanteile erfolgt aus einer Zuführanlage 31 für Schlämme eine Beaufschlagung einer Nasssiebeinrichtung 5 mit bewegbarem Grobsieb 51 in Bandform. Eine Fluidbrause 512 kann eine Nasssiebung einer Schlämme unterstützen, wobei ein Austrag für Grobkorn 511 dieses aus der Vorrichtung ausbringt.

Ein mit einem Fluid durch ein Grobsieb 51 durchtretender Kornanteil wird, gegebenenfalls nach weiteren Siebklassierungen, letztlich auf ein bewegbares Feinsieb 52 in Bandform aufgebracht, erfährt in einer Folge eine Klarwasserbeaufschlagung 522 und/oder eine Luftbeaufschlagung 522 0 zur Verteilung und/oder Vortrocknung einer gewünschten Kornfraktion 521, welche nach einer Trockenanlage 6 vom Siebband 52 abgenommen wird.

In einer Separiereinrichtung 7 erfolgt eine Konzentration von Schleifpartikeln, wobei eine Größenklassiereinrichtung 8 nachgeordnet sein kann.

In einem Wasserabscheider 524 W kann der Austrag für Wasser und Feinkorn 523 getrennt, das Wasser einer Wiederverwendung zugeführt und der Austrag für Feinkornfestteile 524 gegebenenfalls entsorgt werden.

## Patentansprüche

1. Verfahren zur Rückgewinnung von Schleifmittel aus Schneidabfall in Auffangwannen von Abrasiv-Wasserstrahl-Schneidanlagen, wobei eine Separierung und Trocknung von einer gewünschten Größenklasse an Schleifkörnern und dem Restmaterial erfolgt, und wobei der Schneidabfall mit Wasser aufgeschlämmt oder in Wasser integriert durch eine Gewichtsklassierung, wobei Anteile mit einer Dichte von weniger als 2x10³kg/m³abgeschieden und ausgetragen werden, vorbereitet, einer Durchmesserklassierung durch Nasssiebung unterworfen wird und bei einem Ausscheiden von Grob-und Feinanteilen eine Erstellung einer gewünschten Durchmesserklasse des Restmaterials, welches einen wesentlichen Anteil an Schleifmittel aufweist, erfolgt, dieses getrocknet und aus dem trockenen Granulat, das Schleifmittel ausgetragen, in mehrere Größenklassen geteilt und teilweise oder ausschließlich als abrasiver Schneidmittelzusatz zum Wasserstrahl in derartigen Schneidanlagen eingesetzt wird.

2. Verfahren nach Anspruch 1, **dadurch gekennzeichnet, dass** eine Gewichtsklassierung mittels einer Zyklontrennung erfolgt, wobei Anteile mit einer Dichte 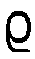 von weniger als 3x10³kg/m³ abgeschieden und ausgetragen werden.

3. Verfahren nach Anspruch 1 oder 2, **dadurch gekennzeichnet, dass** die Schlämme einer Durchmesserklassierung der Feststoffpartikel mittels einer Nasssiebung unterworfen wird, wobei die Partikel-Klasse mit einem Durchmesser im Bereich von 30 µm bis 400 µm der Rückgewinnung von Schleifmaterial zugeführt wird.

4. Verfahren nach Anspruch 3, **dadurch gekennzeichnet, dass** die Nasssiebung mittels einer Einrichtung mit mindestens zwei Sieben erfolgt, wobei die Schlämme auf ein erstes Sieb mit einer Maschenweite von 400 µm bis 200 µm aufgebracht, klassiert und feste Partikel mit einem größeren Durchmesser ausgetragen bzw. dem Abfall zugeteilt werden, wonach weitere Klassierungen nach der Partikelgröße erfolgen können und bei der letzten Nasssiebung der Restschlamm und die Partikel mit einem Durchmesser von kleiner 30 µm mit dem Fluid aus der Einrichtung ausgebracht werden, wobei die Schlämme während der Siebung zumindest auf einem der Siebe zumindest teilweise eine Beaufschlagung mit Wasser und/oder Luft erfährt und der Festanteil mit Schleifkörnern in einer gewünschten Größenklasse aus dem letzten bzw. den vorgeordneten Sieben ausgetragen wird/werden.

5. Verfahren nach einem der vorgeordneten Ansprüche, **dadurch gekennzeichnet, dass** ein/der Partikel-Anteil mit Schleifkörnern in der gewünscht erhaltenen Größenklasse einer Infrarottrocknung unterworfen wird, die eine Wellenlänge der Strahlung von 0.75 µm bis 15 µm aufweist.

6. Verfahren nach einem der vorgeordneten Ansprüche, **dadurch gekennzeichnet, dass** aus dem getrockneten Granulat die Schleifmittelkörner-ausgetragen werden.

7. Vorrichtung zur Rückgewinnung von Schleifmittel aus Schneidabfall aus Auffangwannen (A) von Abrasiv-Wasserstrahl-Schneidanlagen (S) mit einem Mittel zu Separierung einer gewünschten Größenklasse an Schneidkörnern und dem Restmaterial, wobei die Vorrichtung zur Aufbereitung einer Schlämme des Schneidabfalles (1) mit Wasser mit einem Abscheider (3) für einen Leichtanteil, mit einer Nasssiebeinrichtung (5) zur Klassierung beziehungsweise Klassifikation des Schweranteiles und nachgeordnet mit einem Trockner (6) beziehungsweise einer Trockeneinrichtung (6) für eine gewünschte Größenklasse gebildet ist, wobei die Nasssiebeinrichtung (5) mindestens ein Grobsieb (51) zur Abscheidung des Anteiles, der die gewünschte Größenklasse übersteigt, sowie ein Feinsieb (52) zur Ausscheidung des Feinanteiles mit Wasser aus der Restschlämme und einen Austrag (521) der gewünschten Größenklasse des Schweranteiles aufweist, für welchen Schweranteil in der Folge ein Trockner (6) und ein Separator (7) für den Schleifmittelanteil positioniert sind und eine Klassiereinrichtung (8) für diesen dem Separator (7) nachgeordnet ist.

8. Vorrichtung nach Anspruch 7, **dadurch gekennzeichnet, dass** ein erster Teil einer Aufbereitung des Schneidabfalles (1) aus einer Aufschlämmeinrichtung (11) mit Wasser (2) und mindestens einer nachgeordneten Flüssigkeitspumpe(12) gebildet ist , durch welche die Schlämme zur Separierung des Leichtanteiles einem Abscheider in Form einer Zykloneinrichtung (3) zuführbar ist.

9. Vorrichtung nach Anspruch 7 oder 8, **dadurch gekennzeichnet, dass** zur Klassierung des Schweranteiles eine Nasssiebeinrichtung (5) mit mindestens zwei kooperierenden beziehungsweise zusammenwirkenden Sieben (51, 52),die jeweils ein Fördermittel (51F, 52F) für das Siebgut aufweisen können, gebildet ist, wobei ein beaufschlagungsseitig angeordnetes beziehungsweise vorgeordnetes Grobsieb (51) mit einer Zuführanlage (31) der Schlämme mit Schweranteil eine Maschenweite von kleiner 400 µm aufweist und einen Austrag (511) für ein gröberes Korn hat und das Feinsieb (52) zur Abscheidung der Restschlämme eine Maschenweite von 30 µm hat, wobei zumindest das Feinsieb (52) mit Klarwasser (522) und/oder Luft (522 0) beaufschagbar ist und einen Austrag (521) für die gewünschte Kornfraktion hat.

10. Vorrichtung nach einem der Ansprüche 7 bis 9, **dadurch gekennzeichnet, dass** ein Trockner beziehungsweise eine Trockeneinrichtung (6) unter Verwendung von Infrarotstrahlung für die gewünschte Kornfraktion der Siebeinrichtung (5) nachgeordnet ist, wobei die Strahlung eine Wellenlänge von im Wesentlichen 0.75 µm bis 15 µm aufweist.

11. Vorrichtung nach einem der Ansprüche 7 bis 10, **dadurch gekennzeichnet, dass** der Trockeneinrichtung (6) unmittelbar eine Separiereinrichtung (7) beziehungsweise ein Separator für Schleifmittelkörner und Restkörner der gleichen Kornklasse nachgeordnet ist.

12. Vorrichtung nach Anspruch 11, **dadurch gekennzeichnet, dass** der Separiereinrichtung (7) eine Klassiereinrichtung (8) für die Schleifkörner nachgeordnet ist.

## Claims

1. Method for recovery of abrasive material from cutting waste in collecting basins of abrasive water jet cutting systems, whereby a separation and drying of a required size grade of abrasive grains and the residual material takes place, and whereby the cutting waste is suspended with water or integrated in water by weight grading, whereby fractions having a density 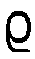 of less than 2x10³ kg/m³ are precipitated and discharged, prepared and subjected to a diameter grading by wet screening, and, when coarse and fine fractions are discharged, a desired diameter grading of the residual material which includes a substantial fraction of abrasive material takes place, this material is dried, divided into a plurality of size grades and discharged from the dry granulate and is used partially or exclusively as an abrasive cutting medium additive to the water jet in such cutting systems.

2. Method according to claim 1, **characterised in that** a weight grading takes place by means of a cyclone separation, whereby fractions having a density 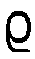 of less than 3x10³ kg/m³ are precipitated and discharged.

3. Method according to claim 1 or 2, **characterised in that** the slurry is subjected to a diameter grading of the solid particles by means of wet screening, whereby the particle grade having a diameter in the range from 30 µm to 400 µm is delivered for recovery of abrasive material.

4. Method according to claim 3, **characterised in that** the wet screening takes place by means of a device having at least two screens, whereby the slurry is deposited onto a first screen with a mesh size from 400 µm to 200 µm, is graded and solid particles having a larger diameter are discharged or are disposed of as waste, after which further gradings according to particle size can take place, and in the last wet screening the residual slurry and the particles having a diameter less than 30 µm are discharged with the fluid from the apparatus, whereby during the screening the slurry is subjected at least partially, at least on one of the screens, to the action of water and/or air, and the solid fraction with abrasive grains in a required size grade is discharged from the last or the preceding screening.

5. Method according to any of the preceding claims, **characterised in that** a/the particle fraction having abrasive grains in the required size grade is subjected to infrared drying, in which the wavelength of the radiation is 0.75 µm to 15 µm.

6. Method according to any of the preceding claims, **characterised in that** the grains of abrasive material are discharged from the dried granulate.

7. Apparatus for recovery of abrasive material from cutting waste from collecting basins (A) of abrasive water jet cutting systems (S) with a means for separation of a required size grade of cutting grains from the residual material, whereby the apparatus for processing a slurry of the cutting waste (1) with water comprises a separator (3) for a light fraction, a wet screening device (5) for grading or classifying the heavy fraction, and a dryer (6) or a drying means (6) arranged downstream for a required size grade, whereby the wet screening device (5) comprises at least one coarse screen (51) for precipitation of the fraction which exceeds the required size grade and a fine screen (52) for precipitation of the fine fraction with water from the residual slurry and a discharge (521) of the required size grade of the heavy fraction, and a dryer (6) and a separator (7) for the abrasive material fraction are then put in place for the heavy fraction, and a grading device (8) for this fraction is arranged downstream of the separator (7).

8. Apparatus according to claim 7, **characterised in that** a first part of the processing of the cutting waste (1) consists of a slurry supplying device (11) with water (2) and at least one liquid pump (12) arranged downstream, which can supply the slurry to a separator in the form of a cyclone device (3) for separation of the light fraction.

9. Apparatus according to claim 7 or 8, **characterised in that** for grading of the heavy fraction a wet screening device (5) is formed with at least two co-operating or interacting screens (51, 52) which can each have a conveying means (51F, 52F) for the material to be screened, whereby a coarse screen (51), which is arranged on the impact side or upstream with a delivery system (31) for the slurry with the heavy fraction, has a mesh size less than 400 µm and has a discharge (511) for a coarser grain, and the fine screen (52) for precipitation of the residual slurry has a mesh size of 30 µm, whereby at least the fine screen (52) can be supplied with clear water (522) and/or air (522 0) and has a discharge (521) for the required grain fraction.

10. Apparatus according to any of claims 7 to 9, **characterised in that** a dryer or a drying means (6) using infrared radiation for the required grain fraction is arranged downstream of the screen device (5), whereby the radiation has a wavelength of substantially 0.75 µm to 15 µm.

11. Apparatus according to any of claims 7 to 10, **characterised in that** a separating device (7) or a separator for grains of abrasive material and residual grains of the same grain grade is arranged immediately downstream of the drying device (6).

12. Device according to claim 11, **characterised in that** a grading device (8) for the abrasive grains is arranged downstream of the separating device (7).

## Revendications

1. Procédé de récupération d'agent abrasif à partir de déchets de coupe dans des cuves collectrices d'installations de découpe au jet d'eau abrasif, dans lequel une séparation et un séchage sont effectués par une classe de grosseur souhaitée de grains abrasifs et du matériau restant, et dans lequel le déchet de coupe est mis en suspension avec de l'eau ou intégré dans de l'eau, préparé par un classement de poids, dans lequel des parts avec une densité 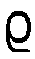 de moins de 2x10³ kg/m³ sont séparées et évacuées, est soumis à un classement de diamètre par tamisage par voie humide et lors d'une séparation de parts grossières et fines un établissement d'une classe de diamètre souhaitée du matériau restant qui présente une part sensible d'agent abrasif, est effectué, celui-ci est séché et à partir du granulat sec, l'agent abrasif est évacué, divisé en plusieurs classes de grandeur et est utilisé partiellement ou exclusivement comme ajout de moyen de découpe abrasif au jet d'eau dans de telles installations de découpe.

2. Procédé selon la revendication 1, **caractérisé en ce qu'**un classement de poids est effectué au moyen d'une séparation cyclonique, dans lequel des parts avec une densité 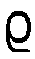 de moins de 3x10³ kg/m³ sont séparées et évacuées.

3. Procédé selon la revendication 1 ou 2, **caractérisé en ce que** la suspension est soumise à un classement de diamètre des particules solides au moyen d'un tamisage par voie humide, dans lequel la classe de particules avec un diamètre dans la plage de 30 µm à 400 µm est amenée à la récupération de matériau abrasif.

4. Procédé selon la revendication 3, **caractérisé en ce que** le tamisage par voie humide est effectué au moyen d'un dispositif avec au moins deux tamis, dans lequel les suspensions sont appliquées, classées sur un premier tamis avec une largeur de maille de 400 µm à 200 µm et des particules solides avec un diamètre plus grand sont évacuées ou attribuées au déchet, après quoi d'autres classements peuvent être effectués selon la grandeur de particules et lors du dernier tamisage par voie humide de la suspension restante et les particules avec un diamètre inférieur à 30 µm avec le fluide sont extraites du dispositif, dans lequel les suspensions pendant le tamisage subissent au moins sur un des tamis au moins partiellement une alimentation avec de l'eau et/ou de l'air et la part solide avec des grains abrasifs dans une classe de grandeur souhaitée est/sont évacuées du dernier tamis ou des tamis en amont.

5. Procédé selon l'une des revendications précédentes, **caractérisé en ce qu'**une/la part de particules est soumise avec des grains abrasifs dans la classe de grandeur obtenue de manière souhaitée à un séchage à infrarouge qui présente une longueur d'onde de rayonnement de 0,75 µm à 15 µm.

6. Procédé selon l'une des revendications précédentes, **caractérisé en ce que** les grains d'agent abrasif sont évacués du granulat séché.

7. Dispositif de récupération d'agent abrasif à partir de déchets de découpe de cuves collectrices (A) d'installations de découpe par jet d'eau abrasif (S) avec un moyen de séparation d'une classe de grandeur souhaitée de grains de découpe et du matériau restant, dans lequel le dispositif de préparation d'une suspension du déchet de découpe (1) avec de l'eau est formé avec un séparateur (3) pour une part légère, avec un dispositif de tamis par voie humide (5) pour le classement ou la classification de la part lourde et en aval avec un séchoir (6) ou un dispositif de séchage (6) pour une classe de grandeur souhaitée, dans lequel le dispositif de tamisage par voie humide (5) présente au moins un tamis grossier (51) pour la séparation de la part qui dépasse la classe de grandeur souhaitée, ainsi qu'un tamis fin (52) pour la séparation de la part fine avec de l'eau de la suspension restante et une évacuation (521) de la classe de grandeur souhaitée de la part lourde, pour laquelle part lourde ensuite un séchoir (6) et un séparateur (7) pour la part d'agent abrasif sont positionnés et un dispositif de classement (8) pour celui-ci est agencé en aval du séparateur (7).

8. Procédé selon la revendication 7, **caractérisé en ce qu'**une première partie d'une préparation du déchet de découpe (1) d'un dispositif de mise en suspension (11) est formée avec de l'eau (2) et au moins une pompe de liquide (12) agencée en aval, par laquelle la suspension de séparation de la part légère peut être amenée à un séparateur sous la forme d'un dispositif cyclonique (3).

9. Dispositif selon la revendication 7 ou 8, **caractérisé en ce que** pour le classement de la part lourde un dispositif de tamisage par voie humide (5) est formé avec au moins deux tamis (51, 52) coopérants ou coagissants qui peuvent présenter respectivement un moyen de transport (51F, 52F) pour le produit tamisé, dans lequel un tamis grossier (51) agencé en amont ou agencé côté alimentation présente avec une installation d'amenée (31) de la suspension avec une part lourde une largeur de maille de moins de 400 µm et présente une évacuation (511) pour un grain plus grossier et le tamis fin (52) pour la séparation de la suspension restante une largeur de maille de 30 µm, dans lequel au moins le tamis fin (52) peut être alimenté avec de l'eau clarifiée (522) et/ou de l'air (522 0) et présente une évacuation (521) pour la fraction de grain souhaitée.

10. Dispositif selon l'une des revendications 7 à 9, **caractérisé en ce qu'**un séchoir ou un dispositif de séchage (6) est monté en utilisant le rayonnement à infrarouge pour la fraction de grain souhaitée en aval du dispositif de tamisage (5), dans lequel le rayonnement présente une longueur d'onde de sensiblement 0,75 µm à 15 µm.

11. Dispositif selon l'une des revendications 7 à 10, **caractérisé en ce qu'**un dispositif de séparation (7) ou un séparateur pour des grains d'agent abrasif et des grains restants de la classe de grain identique est directement agencé en aval du dispositif de séchage (6).

12. Dispositif selon la revendication 11, **caractérisé en ce qu'**un dispositif de classement (8) pour les grains abrasifs est agencé en aval du dispositif de séparation (7).
